# EUROPÄISCHE PATENTSCHRIFT

(11) **EP 1 697 646 B1**
(45) Veröffentlichungstag und Bekanntmachung des Hinweises auf die Patenterteilung: **12.08.2015**
(21) Anmeldenummer: 04803228.8
(22) Anmeldetag: 23.11.2004
(51) Int. Cl.: F16B 5/02, F16B 33/00

(54) **ANORDNUNG ZUR BEFESTIGUNG EINES WÄRMEÜBERTRAGERS, INSBESONDERE EINES KÜHLMODULS IN EINEM KRAFTFAHRZEUG**
ARRANGEMENT FOR FIXING A HEAT EXCHANGER, PARTICULARLY A COOLING MODULE IN A MOTOR VEHICLE
DISPOSITIF PERMETTANT DE FIXER UN ECHANGEUR DE CHALEUR, EN PARTICULIER UN MODULE DE REFROIDISSEMENT, DANS UN VEHICULE A MOTEUR

(30) Priorität: 16.12.2003 DE 10359357
(43) Veröffentlichungstag der Anmeldung: 06.09.2006
(73) Patentinhaber: MAHLE Behr GmbH & Co. KG, 70469 Stuttgart (DE)
(72) Erfinder: WILBERT, Ralf, 82216 Gernlinden (DE)
(74) Vertreter: Grauel, Andreas
(86) Internationale Anmeldenummer: PCT/EP2004/013271
(87) Internationale Veröffentlichungsnummer: WO 2005/059382

(56) Entgegenhaltungen:
- DE-A1- 4 030 720
- DE-A1- 10 207 025
- US-B1- 6 260 609

## Beschreibung

Die Erfindung betrifft einen Schraubbolzen zur Befestigung von Bauteilen nach dem Oberbegriff des Patentanspruches 1. Die Erfindung betrifft ferner eine Anordnung zur Befestigung eines Wärmeübertragers, insbesondere eines Kühlmoduls in einem Kraftfahrzeug nach dem Oberbegriff des Patentanspruches 12, und die Erfindung betrifft auch ein Lager zur Abstützung eines Wärmeübertragers, insbesondere eines Kühlmoduls in einem Kraftfahrzeug nach dem Oberbegriff des Patentanspruches 16.

Wärmeübertrager für Kraftfahrzeuge, z. B. Kühlmittel/Luftkühler oder so genannte Kühlmodule, bestehend aus Kühlmittel/Luftkühler, Kondensator und/oder Ladeluftkühler, werden im vorderen Motorraum des Kraftfahrzeuges angeordnet und dort fahrzeugseitig befestigt, z. B. an einem unteren Querträger und einem oberen Querträger, dem so genannten Schlossträger. Am Wärmeübertrager, z.. B. an den Kühlmittelkästen des Kühlers sind dafür Befestigungsmittel in Form von Zapfen, Aufnahmeöffnungen oder Laschen vorgesehen, während am Fahrzeug entsprechende Haltemittel in Form von elastischen Lagern, z. B. Gummibuchsen vorgesehen sind. Der Wärmeübertrager bzw. das Kühlmodul wird somit häufig an vier Befestigungsstellen, zwei unteren und zwei oberen, im Fahrzeug befestigt, was z. B. aus der US 62 60 609 B1, oder aus der DE-C 42 44 037 hervorgeht. Der Aufbau eines Kühlmoduls ist beispielsweise in der DE-A 199 53 787 beschrieben.

Bei einer Vier-Punktlagerung im Kraftfahrzeug liegt der tragende Wärmeübertrager (Träger des Kühlmoduls) meistens mit zwei unteren Zapfen in elastischen Lagern auf dem unteren Querträger auf und wird nach oben gegen den Schlossträger an zwei weiteren Befestigungspunkten elastisch abgestützt. Für diese Abstützung werden zum Teil Schraubbolzen verwendet, welche mit einem maschinellen Schrauber in den Schlossträger eingeschraubt und gegen das elastische Lager verspannt werden. Fertigungsbedingte Ungenauigkeiten sowie Toleranzen an den zu befestigenden Bauteilen und bei der Drehmomentbegrenzung des Schraubers führen teilweise zu einer zu starken Verspannung der elastischen Lager, sodass der Wärmeübertrager ebenfalls verspannt ist, d. h. unter einer erhöhten Druckspannung steht. Insbesondere bei Fahrzeugen mit relativ weicher Karosserie kann ein derartig im Fahrzeug verspanntes Kühlmodul zu Schwingungsanregungen und damit zu einer unerwünschten Geräuschentwicklung führen.

Es ist daher Aufgabe der vorliegenden Erfindung, einen Schraubbolzen der eingangs genannten Art zu schaffen, welcher eine verspannungsfreie Montage zulässt; ferner ist es Aufgabe der Erfindung, eine Anordnung zur Befestigung eines Wärmeübertragers und ein Lager zur Abstützung eines Wärmeübertragers der eingangs genannten Art dahingehend zu verbessern, dass eine verspannungsfreie Montage und Befestigung des Wärmeübertragers im Kraftfahrzeug möglich ist.

Diese Aufgabe wird zunächst durch die Merkmale des Patentanspruches 1 gelöst. Erfindungsgemäß ist bei einem als Anschlag eingesetzten Schraubbolzen eine Wegbegrenzung für die Einschraubtiefe in Form eines in der Schraube angeordneten längsbeweglichen Stiftes vorgesehen. Beim Einschrauben des Bolzens, was mit einem maschinellen Schrauber erfolgt, schiebt sich der Stift bei Kontakt mit dem zu verbindenden Bauteil nach außen und drückt den Schrauber aus dem Schraubbolzen heraus, sodass der Einschraubvorgang beendet ist. Dadurch wird der Vorteil erreicht, dass ein Verspannen der Bauteile vermieden wird, weil die Einschraubbewegung bei einem Druckkontakt des Bolzens mit dem abzustützenden Bauteil abgebrochen wird. Vorzugsweise ist der Stift unverlierbar in dem Schraubbolzen angeordnet, d. h. er wird mit dem Schraubbolzen montiert. Dazu wird ein Schrauber mit Endprofil in ein entsprechendes Aufnahmeprofil im Schraubbolzen eingesetzt, wobei gleichzeitig der Stift nach außen gedrückt wird. Beim Einschrauben steht der Stift also in Einschraubrichtung vor und bekommt zuerst Kontakt mit dem anderen Bauteil, z. B. mit dem Boden eines Sackloches. Bei weiterer Einschraubbewegung schiebt sich der Stift nach außen in Richtung Schrauber, bis er bündig mit der Stirnfläche des Schraubbolzens abschließt und zum Anschlag kommt. Die Länge des Stiftes ist so bemessen, dass der im Schraubkopf überstehende Teil etwa der Eingriffshöhe des Schraubers entspricht. Damit wird dieser durch das Austreten des Stiftes außer Eingriff gesetzt.

Weitere vorteilhafte Ausgestaltungen der Erfindung ergeben sich aus den Unteransprüchen. Vorzugsweise ist der Schraubbolzen aus Kunststoff hergestellt und ebenso der in seinem Inneren, d. h. in dem Längskanal angeordnete Stift. Möglich ist auch ein Kunststoffbolzen mit einem Metallstift. Ferner ist am Schraubbolzen eine Rückdrehsicherung vorgesehen, und zwar durch am Umfang des Schaftes angeordnete Ringrippen, die oberhalb von einer Rückhaltelippe einer elastischen Lagerbuchse umschlossen werden. Somit wird der Vorteil erreicht, dass sich der Schraubbolzen mangels Verspannung nicht zurückdreht und aus seiner Halterung löst.

Die Erfindung wird auch durch die Merkmale des Patentanspruches 12 gelöst, d. h. bei einer Anordnung zur Befestigung eines Wärmeübertragers in einem Kraftfahrzeug. Erfindungsgemäß wird der Wärmeübertrager oder auch ein ganzes Kühlmodul im Fahrzeug abgestützt, und zwar vorzugsweise an vier Befestigungsstellen, zwei unteren und zwei oberen. Die unteren Befestigungsstellen an einem unteren Querträger sind konventionell, d. h. sie bestehen aus elastischen Lagerbuchsen, in welche Zapfen der Wärmeübertrager eingreifen. Die beiden oberen Befestigungspunkte, vorzugsweise am Schlossträger des Kraftfahrzeuges werden mittels Schraubbolzen mit Wegbegrenzung dargestellt. Wärmeübertragerseitig ist ein napfförmig ausgebildetes, elastisches Lager vorgesehen, in welches der Schraubbolzen mit Wegbegrenzung eingreift, welcher von oben mit einem Druckluftschrauber in den Querträger eingeschraubt wird. Die Wegbegrenzung ist dabei vorgesehen, um ein Verspannen der elastischen Lager zu vermeiden. Vorzugsweise wird der Wärmeübertrager bzw. das Kühlmodul mit zwei erfindungsgemäßen Schraubbolzen befestigt. Man erreicht hiermit den Vorteil, dass eine Verspannung der elastischen Lager und damit auch des gesamten Kühlers oder Wärmeübertragers vermieden wird. Damit wird auch eine Entkoppelung des Kühlers bzw. Kühlmoduls an den Lagerstellen erreicht. Somit werden auch keine Schwingungen vom Fahrzeug übertragen, insbesondere in vertikaler Richtung (Z-Richtung) weitergeleitet und unerwünschte Geräusche (Brummen) vermieden. Ferner wird der Vorteil erreicht, dass die erfindungsgemäßen Schraubbolzen mit Wegbegrenzung maschinell (mit Druckluftschrauber) montiert werden können, ohne dass es dabei zu einer Verspannung kommt.

Schließlich wird die Aufgabe auch durch die Merkmale des Patentanspruches 16, d. h. für ein Lager zur Abstützung eines Wärmeübertragers, insbesondere eines Kühlmoduls in einem Kraftfahrzeug gelöst. Dieses Lager kann zur Befestigung eines Wärmeübertragers, eines Kühlmoduls oder auch anderer Bauteile im Kraftfahrzeug verwendet werden, wobei als Haltemittel, welches sich am Kraftfahrzeug, z. B. einem Träger abstützt, ein Schraubbolzen mit Wegbegrenzung vorgesehen ist. Der Schraubbolzen greift mit seinem freien Ende in ein napfförmig ausgebildetes elastisches Lager ein, welches am Wärmeübertrager oder sonstigem Bauteil befestigt ist. Das Einschrauben des Schraubbolzens in den Träger kann maschinell erfolgen und wird bei Kontakt mit dem elastischen Lager durch die Wegbegrenzung unterbrochen. Damit wird für das Lager der Vorteil einer verspannungsfreien Befestigung erreicht, was auch bei druckempfindlichen Bauteilen und automatischer Fertigung von Vorteil sein kann.

Ein Ausführungsbeispiel der Erfindung ist in der Zeichnung dargestellt und wird im Folgenden näher beschrieben. Es zeigen
- Fig. 1: eine schematische Darstellung für die Befestigung eines Kühlmoduls in einem Kraftfahrzeug und
- Fig. 2: ein Lager mit erfindungsgemäßen wegbegrenzten Schraubbolzen.

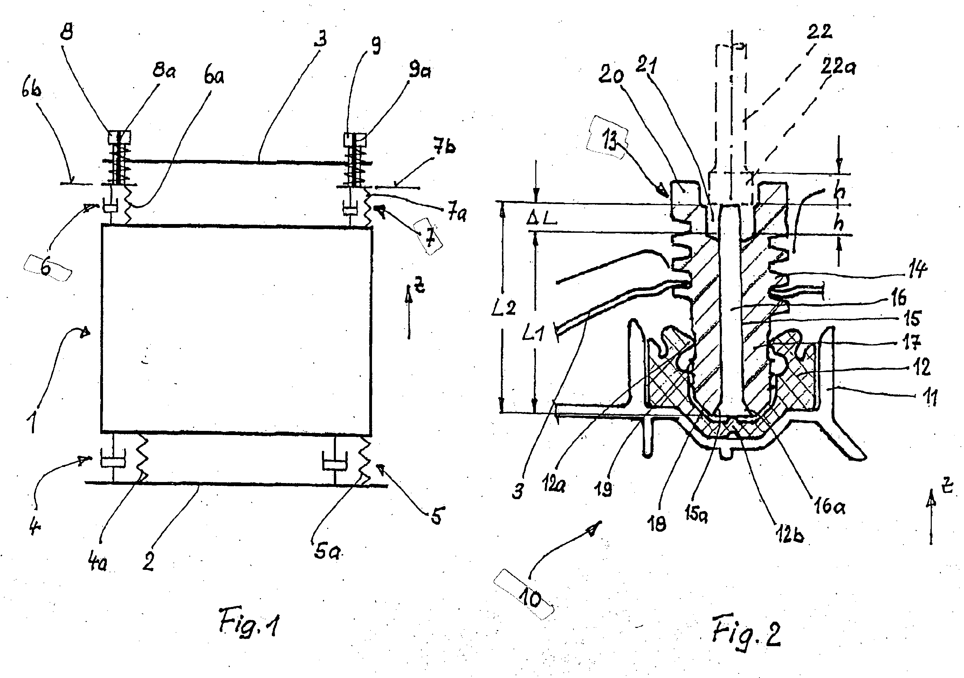

**Fig. 1** zeigt in schematischer Darstellung die Befestigung eines als Kühlmittelkühler 1 ausgebildeten Wärmeübertragers an einem unteren Querträger 2 und einem oberen Querträger 3, dem so genannten Schlossträger eines nicht dargestellten Kraftfahrzeuges. Der Kühler 1 ist (muss jedoch nicht) Träger eines nicht dargestellten Kühlmoduls, welches beispielsweise zusätzlich zum Kühler 1 einen Kältemittelkondensator und einen Ladeluftkühler aufweist, welche ihrerseits direkt mit dem Kühler 1 verbunden sind. Der Kühler 1 weist zwei untere Lager 4, 5 sowie zwei obere Lager 6, 7 auf, ist also an vier Punkten gegenüber dem Kraftfahrzeug abgestützt. Die unteren Lager 4, 5 entsprechen dem Stand der Technik und bestehen aus einer fahrzeugseitigen elastischen Buchse, die einen kühlerseitigen Zapfen form- und kraftschlüssig aufnimmt. Schematisch dargestellte Federn 4a, 5a repräsentieren die nicht dargestellten elastischen Gummibuchsen. Die oberen Abstützpunkte 6, 7 sind ebenfalls elastisch, was durch Federn 6a, 7a angedeutet ist. In den Querträger 3 sind im Bereich der oberen Lager 6, 7 Schraubbolzen 8, 9 eingeschraubt, welche eine durch einen Stift 8a, 9a an gedeutete Wegbegrenzung fur die Einschraubtiefe aufweisen. Die kühlerseitigen Lager 6, 7 weisen eine obere jeweils waagerecht eingezeichnete Begrenzungsebene 6b, 7b auf, welche in Kontakt mit der Unterseite der Schraubbolzen 8, 9 steht. Letztere werden aufgrund einer eingebauten Wegbegrenzung 8a, 9a - die im Folgenden erläutert wird - nur so weit eingeschraubt, dass die Federn 6a, 7a praktisch nicht bzw. nur unwesentlich verspannt werden. Damit wirken die beiden Schraubbolzen 8, 9 im Wesentlichen als Anschlag in Z-Richtung (vgl. seitlicher Pfeil Z), und die unteren Fedem 4a, 5a sind im stationären Zustand nur aufgrund des auf ihnen lastenden Gewichts des Kühlmoduls gespannt.

**Fig. 2** zeigt eine konstruktive Ausführung eines oberen Lagers 10, welches den schematischen Darstellungen 6, 7 in Fig. 1 entspricht. Der kühlerseitige Teil des Lagers 10 besteht aus einer topfförmigen Aufnahme 11, welche direkt oder mittelbar mit dem Kühler 1 (Fig. 1) verbunden ist. In der nach oben offenen Aufnahme 11 ist eine napfförmige Buchse 12 mit einer Rückhaltelippe 12a und einem Boden 12b aus einem elastomeren Werkstoff angeordnet und befestigt, z. B. durch Verkleben. In die napfförmige Buchse 12 greift ein Schraubbolzen 13 ein, welcher ein Schraubgewinde 14 aufweist und in den Schlossträger 3 eingeschraubt ist. Der Schraubbolzen 13, der aus Kunststoff hergestellt ist, weist in seinem Inneren einen in Richtung der Längsachse des Schraubbolzens 13 verlaufenden Längskanal 15 auf, in welchem ein Stift 16 in Längsrichtung gleitend aufgenommen ist. Der Schraubbolzen 13 weist, anschließend an das Schraubgewinde 14, einen Schaft 17 und eine untere Stirnfläche 18 auf, mit weicher er auf dem Boden 12b der elastomeren Buchse 12 aufliegt. Im Bereich des unteren Teils des Schaftes 17 sind umlaufende Rippen 19 angeordnet. Die umlaufende Rückhalterippe 12a verhindert bzw. erschwert ein Austreten oder Ausdrehen des Schraubbolzens 13 aus der sacklochartigen Vertiefung der Buchse 12. Der Schraubbolzen 13 weist einen Schraubkopf 20 mit einer Ausnehmung bzw. Vertiefung 21 auf, welche ein nicht dargestelltes Innen-Polygonprofil zum Einsetzen eines gestrichelt dargestellten Werkzeuges 22 aufweist. Der Längskanal 15 weist eine Länge L1 und der darin geführte Stift 16 eine Länge L2 auf, die um den Differenzbetrag ΔL größer als L1 ist; Der Stift 16 weist an seinem unteren Ende einen konisch aufgeweiteten Bereich 16a auf, welcher auf einer Fase 15a des Längskanals 15 aufliegt. Die Zeichnung zeigt den Stift 16 auf Anschlag mit dem Schraubbolzen 13, d. h. das Ende 16a des Stiftes ist bündig mit der Stirnfläche 18 des Schraubbolzens 13. In dieser Position ragt das andere, das obere Ende des Stiftes 16 um den Betrag ΔL nach oben in die Vertiefung 21 hinein. Das Werkzeug 22, ein Druckluftschrauber, weist einen profilierten, gestrichelt dargestellten Kopf 22a auf, der in das Polygonprofil der Vertiefung 21 passt, allerdings durch den herausstehenden Stift 16 blockiert ist, da die Unterkante des Schraubkopfes 22a auf der Oberkante des Stiftes 16 aufliegt. Der Schraubkopf 22a weist eine Eingriffshöhe h auf, die dem Differenzbetrag ΔL entspricht.

Der Schraubbolzen 13 mit erfindungsgemäßer Wegbegrenzung wird wie folgt montiert: das Werkzeug, d. h. der Druckluftschrauber 22 wird mit seinem Kopf 22a in die Vertiefung 21 des Schraubkopfes 13 eingesetzt und verschiebt damit den Stift 16 in Richtung der Stirnfläche 18, aus welcher das Ende 16a heraustritt; das Ende 16a steht somit gegenüber der Stirnfläche 18 vor. Mit dieser Stiftposition wird der Schraubkopf 13 in die Einschrauböffnung des Schlossträgers 3 eingesetzt und eingeschraubt, und zwar so weit, bis das Ende 16a den Boden 12b der Buchse 12 berührt. In dem gleichen Maße, wie der Schraubbolzen 13 in den Schlossträger 3 eingeschraubt wird, verlagert sich der Stift 16 nach außen in die Vertiefung 12 und schiebt den Kopf 22a bis zu einem Betrag ΔL = h nach außen, sodass der Kopf 22a außer Eingriff kommt. Der Einschraubvorgang ist damit beendet, bevor die elastomere Buchse 12 verspannt wurde. Vielmehr hat die Stirnfläche 18 des Schraubbolzens 13 lediglich einen durch Berührung hergestellten Kontakt mit dem elastischen Boden 12b der Buchse 12. Da der Bolzen 13 in Längsrichtung nicht unter Druckspannung steht, könnte er sich zurückdrehen, was jedoch durch die Rückhaltelippe 12a in Verbindung mit den Ringrippen 19 verhindert wird. Damit wird der Schraubbolzen 13 nach der Montage unverlierbar.

Wie bereits erwähnt, sind beide Lager 6, 7 gemäß Fig. 1 entsprechend dem Lager 10 mit den erfindungsgemäßen Schraubbolzen 13 mit Wegbegrenzung ausgebildet, sodass der Kühler 1 spannungsfrei abgestützt ist.

## Patentansprüche

1. Anordnung zur Befestigung eines Wärmeübertragers (1), insbesondere eines Kühlmoduls in einem Kraftfahrzeug, vorzugsweise an vier, zwei oberen und zwei unteren Befestigungsstellen (4, 5, 6, 7), wobei miteinander in Eingriff stehende Befestigungsmittel am Wärmeübertrager (1) und Haltemittel am Kraftfahrzeug (2, 3) vorgesehen sind, wobei mindestens ein Befestigungsmittel als elastomeres Lager (6a, 7a) und mindestens ein Haltemittel als Schraubbolzen (8, 9, 13) mit Wegbegrenzung (8a, 9a) ausgebildet sind, der sich einerseits am Kraftfahrzeug (3) und andererseits am elastomeren Lager (6a, 7a) im Wesentlichen verspannungsfrei abstützt, wobei der Schraubbolzen (8, 9, 13) mit einem Schraubkopf (20), einem Einschraubgewinde (14), einem Schaft (17) und einer Stirnfläche (18) sowie mit einer Vertiefung (21) zum Einsetzen eines Werkzeuges (22a), welcher eine Eingriffshöhe h aufweist, versehen ist, **dadurch gekennzeichnet, dass** in dem Schraubbolzen (8, 9, 13) ein am Schraubkopf (20) und in der Stirnfläche (18) austretender Längskanal (15) der Länge L1 und in dem Längskanal (15) ein in Längsrichtung beweglicher Stift (16) der Länge L2 angeordnet sind, wobei L2 um den Betrag ΔL größer als L1 ist und ΔL der Eingriffshöhe h des Werkzeugkopfes (22a) entspricht.

2. Anordnung nach Anspruch 1, **dadurch gekennzeichnet, dass** der mindestens eine Schraubbolzen (8, 9) in einen oberhalb des Wärmeübertragers (1) angeordneten Querträger (3) eingeschraubt und durch die Wegbegrenzung (8a, 9a) in seiner Einschraubtiefe begrenzt ist.

3. Anordnung nach Anspruch 1 oder 2, **dadurch gekennzeichnet, dass** die unteren Haltemittel (4, 5) an einem unteren Querträger (2) angeordnet und dass der Wärmeübertrager (1) respektive das Kühlmodul weitestgehend druckspannungsfrei zwischen beiden Querträgern (2, 3) abgestützt ist.

4. Anordnung nach einem der vorhergehenden Ansprüche, **dadurch gekennzeichnet, dass** der Stift (16) unverlierbar im Schraubbolzen (13) gehalten ist.

5. Anordnung nach einem der vorhergehenden Ansprüche, **dadurch gekennzeichnet, dass** der Stift (16) im Bereich der Stirnfläche (18) einen Anschlag aufweist.

6. Anordnung nach Anspruch 5, **dadurch gekennzeichnet, dass** der Anschlag als konische Erweiterung (16a) aussgebildet ist, die an einer Fase (15a) des Längskanals (15) anliegt und bündig mit der Stirnfläche (18) abschließt.

7. Anordnung nach einem der Ansprüche 1 bis 6, **dadurch gekennzeichnet, dass** die Vertiefung (21) ein Polygonprofil zur Aufnahme eines Gegenprofils des Werkzeugkopfes (22a) mit der Eingriffshöhe h aufweist.

8. Anordnung nach einem der vorhergehenden Ansprüche, **dadurch gekennzeichnet, dass** der Längskanals(15) in die Vertiefung (21) mündet.

9. Anordnung nach einem der Ansprüche 1 bis 8, **dadurch gekennzeichnet, dass** der Schraubbolzen (8, 9, 13) als Kunststoffspritzteil (13) ausgebildet ist.

10. Anordnung nach einem der Ansprüche 1 bis 9, **dadurch gekennzeichnet, dass** der Stift (16) aus Kunststoff hergestellt ist.

11. Anordnung nach einem der Ansprüche 1 bis 10, **dadurch gekennzeichnet, dass** der Schraubbolzen (13) mit seiner Stirnfläche (18) auf einem elastomeren Lager (12b) aufliegt und einen Anschlag bildet.

12. Anordnung nach einem der Ansprüche 1 bis 11, **dadurch gekennzeichnet, dass** der Schraubbolzen (13), insbesondere im Bereich des Schafts (17), eine Rückdrehsicherung aufweist.

13. Anordnung nach Anspruch 12, **dadurch gekennzeichnet, dass** die Rückdrehsicherung aus einer den Schaft (17) umschließenden Lippe (12a) des elastomeren Lagers (12) und nach außen vorstehenden Ringrippen (19) am Schaft (17) besteht.

14. Lager zur Abstützung eines Wärmeübertragers, insbesondere eines Kühlmoduls in einem Kraftfahrzeug an einem Träger (3), bestehend aus Befestigungsmitteln am Wärmeübertrager und Haltemitteln am Träger (3), wobei die Befestigungsmittel am Wärmeübertrager als eine nach oben offene, topfförmige Ausnehmung (11) und als eine elastomere, napfförmige Buchse (12), die von der Ausnehmung (11) aufgenommen wird, und die Haltemittel am Träger (3) als Schraubbolzen (8, 9, 13) mit Wegbegrenzung (16) ausgebildet sind und dass der Schraubbolzen (8, 9, 13) einerseits in den Träger (3) einschraubbar und andererseits im Wesentlichen spannungsfrei von der Buchse (12) aufnehmbar ist, wobei der Schraubbolzen (13) mit einem Schraubköpf (20), einem Einschraubgewinde (14), einem Schaft (17) und einer Stirnfläche (18) sowie mit einer Vertiefung (21) zum Einsetzen eines Werkzeuges (22a), welcher eine Eingriffshöhe h aufweist, versehen ist, **dadurch gekennzeichnet, dass** in dem Schraubbolzen (13) ein am Schraubkopf (20) und in der Stirnfläche (18) austretender Längskanal (15) der Länge L1 und in dem Längskanal (15) ein in Längsrichtung beweglicher Stift (16) der Länge L2 angeordnet sind, wobei L2 um den Betrag ΔL größer als L1 ist und ΔL der Eingriffshöhe h des Werkzeugkopfes (22a) entspricht.

15. Lager nach Anspruch 14, **dadurch gekennzeichnet, dass** der Schraubbolzen (13) unverlierbar von der Buchse (12) aufgenommen ist.

## Claims

1. An arrangement for fixing a heat exchanger (1), particularly a cooling module in a motor vehicle, preferably at four, two upper and two lower, fixing points (4, 5, 6, 7), wherein interengaging fixing means are provided on the heat exchanger (1) and retaining means are provided on the motor vehicle (2, 3), wherein at least one fixing means is designed as an elastomeric bearing (6a, 7a) and at least one retaining means is designed as a screw bolt (8, 9, 13) with a displacement limit stop (8a, 9a), the screw bolt being supported in an essentially strain-free manner firstly on the motor vehicle (3) and secondly on the elastomeric bearing (6a, 7a), wherein the screw bolt (8, 9, 13) has a screw head (20), a screw-in thread (14), a stem (17) and an end surface (18) and a depression (21) for the insertion of a tool (22a) which has an engagement height h, **characterized in that** a longitudinal channel (15) of length L1 emerging at the screw head (20) and in the end surface (18) is arranged in the screw bolt (8, 9, 13) and a pin (16) of length L2 which is moveable in the longitudinal direction is arranged in the longitudinal channel (15), wherein L2 is larger than L1 by the amount ΔL, and ΔL corresponds to the engagement height h of the tool head (22a).

2. The arrangement as claimed in claim 1 **characterized in that** the at least one screw bolt (8, 9) is screwed into a cross member (3) arranged above the heat exchanger (1) and is restricted in its screw-in depth by the displacement limit stop (8a, 9a).

3. The arrangement as claimed in claim 1 or 2, **characterized in that** the lower retaining means (4, 5) are arranged on a lower cross member (2), and **in that** the heat exchanger (1) or more precisely the cooling module is supported between the two cross members (2, 3) in a manner very substantially free from compressive stress.

4. The arrangement as claimed in any one of the preceding claims, **characterized in that** the pin (16) is held captively in the screw bolt (13).

5. The arrangement as claimed in any one of the preceding claims, **characterized in that** the pin (16) has a stop in the region of the end surface (18).

6. The arrangement as claimed in claim 5, **characterized in that** the stop is designed as a conical widening (16a) which bears against a bevel (15a) of the longitudinal channel (15) and ends flush with the end surface (18).

7. The arrangement as claimed in any one of the claims 1 to 6, **characterized in that** the depression (21) has a polygonal profile for receiving a mating profile of the tool head (22a) with the engagement height h.

8. The arrangement as claimed in any one of the preceding claims, **characterized in that** the longitudinal channel (15) opens into the depression (21).

9. The arrangement as claimed in any one of the claims 1 to 8, **characterized in that** the screw bolt (8, 9, 13) is designed as a plastic molded part (13).

10. The arrangement as claimed in any one of the claims 1 to 9, **characterized in that** the pin (16) is produced from plastic.

11. The arrangement as claimed in any one of the claims 1 to 10, **characterized in that** the screw bolt (13) rests with its end surface (18) on an elastomeric bearing (12b) and forms a stop.

12. The arrangement as claimed in any one of the claims 1 to 11, **characterized in that** the screw bolt (13) has a reversing lock, in particular in the region of the stem (17).

13. The arrangement as claimed in claim 12, **characterized in that** the reversing lock comprises a lip (12a) of the elastomeric bearing (12), which lip surrounds the stem (17), and outwardly protruding annular ribs (19) on the stem (17).

14. A bearing for supporting a heat exchanger, particularly a cooling module in a motor vehicle, on a support (3), comprising fixing means on the heat exchanger and retaining means on the support (3), wherein the fixing means on the heat exchanger are designed as an upwardly open, pot-shaped recess (11) and as an elastomeric, cup-shaped bushing (12) which is received by the recess (11), and the retaining means on the support (3) are designed as a screw bolt (8, 9, 13) with a displacement limit stop (16), and wherein the screw bolt (8, 9, 13) can firstly be screwed into the support (3) and can secondly be received by the bushing (12) in an essentially stress-free manner wherein the screw bolt (13) has a screw head (20), a screw-in thread (14), a stem (17) and an end surface (18) and a depression (21) for the insertion of a tool (22a) which has an engagement height h, **characterized in that** a longitudinal channel (15) of length L1 emerging at the screw head (20) and in the end surface (18) is arranged in the screw bolt (13) and a pin (16) of length L2 which is moveable in the longitudinal direction is arranged in the longitudinal channel (15), wherein L2 is larger than L1 by the amount ΔL, and ΔL corresponds to the engagement height h of the tool head (22a).

15. The bearing as claimed in claim 14, **characterized in that** the screw bolt (13) is received captively by the bushing (12).

## Revendications

1. Agencement permettant la fixation d'un échangeur de chaleur (1), en particulier d'un module de refroidissement dans un véhicule automobile, de préférence au niveau de quatre points de fixation (4, 5, 6, 7), à savoir deux points supérieurs et deux points inférieurs, où il est prévu des moyens de fixation placés sur l'échangeur de chaleur (1) et des moyens de retenue placés sur le véhicule automobile (2, 3), lesdits moyens venant en prise les uns avec les autres, où au moins un moyen de fixation est conçu comme un palier élastomère (6a, 7a), et au moins un moyen de retenue est conçu comme un boulon fileté (8, 9, 13) à limitation de course (8a, 9a), boulon fileté qui s'appuie, pratiquement sans contrainte, d'une part sur le véhicule automobile (3) et d'autre part sur le palier élastomère (6a, 7a), où le boulon fileté (8, 9, 13) est doté d'une tête de vis (20), d'un filetage à visser (14), d'une tige (17) et d'une face frontale (18), et doté également d'un creux (21) servant à l'introduction d'une tête d'outil (22a) qui présente une hauteur de prise h, **caractérisé en ce qu'**un conduit longitudinal (15) de la longueur L1 est disposé dans le boulon fileté (8, 9, 13), ledit conduit longitudinal sortant au niveau de la tête de vis (20) et dans la face frontale (18), et une goupille (16) de la longueur L2 est disposée dans le conduit longitudinal (15), ladite goupille étant mobile dans la direction longitudinale, où la longueur L2 est plus grande que la longueur L1, d'une grandeur ΔL, et ΔL correspond à la hauteur de prise h de la tête d'outil (22a).

2. Agencement selon la revendication 1, **caractérisé en ce que** le boulon fileté (8, 9) au moins au nombre de un est vissé dans une traverse (3) disposée au-dessus de l'échangeur de chaleur (1) et est limité dans sa profondeur de vissage, par la limitation de course (8a, 9a).

3. Agencement selon la revendication 1 ou 2, **caractérisé en ce que** les moyens de retenue inférieurs (4, 5) sont disposés sur une traverse inférieure (2), et **en ce que** l'échangeur de chaleur (1), respectivement le module de refroidissement, est supporté entre les deux traverses (2, 3), dans une très large mesure sans contrainte de compression.

4. Agencement selon l'une quelconque des revendications précédentes, **caractérisé en ce que** la goupille (16) est retenue dans le boulon fileté (13), de façon imperdable.

5. Agencement selon l'une quelconque des revendications précédentes, **caractérisé en ce que** la goupille (16) présente une butée dans la zone de la face frontale (18).

6. Agencement selon la revendication 5, **caractérisé en ce que** la butée est configurée comme un élargissement conique (16a) qui vient en appui sur un chanfrein (15a) du conduit longitudinal (15) et se termine en étant à fleur de la face frontale (18).

7. Agencement selon l'une quelconque des revendications 1 à 6, **caractérisé en ce que** le creux (21) présente un profil de polygone servant au logement d'un contre-profil de la tête d'outil (22a) ayant la hauteur de prise h.

8. Agencement selon l'une quelconque des revendications précédentes, **caractérisé en ce que** le conduit longitudinal (15) débouche dans le creux (21).

9. Agencement selon l'une quelconque des revendications 1 à 8, **caractérisé en ce que** le boulon fileté (8, 9, 13) est conçu comme une pièce en matière plastique (13) moulée par injection.

10. Agencement selon l'une quelconque des revendications 1 à 9, **caractérisé en ce que** la goupille (16) est fabriquée en matière plastique.

11. Agencement selon l'une quelconque des revendications 1 à 10, **caractérisé en ce que** le boulon fileté (13) est en appui sur un palier élastomère (12b), par sa face frontale (18), et forme une butée.

12. Agencement selon l'une quelconque des revendications 1 à 11, **caractérisé en ce que** le boulon fileté (13) présente, en particulier dans la zone de la tige (17), une sécurité bloquant une rotation en sens inverse.

13. Agencement selon la revendication 12, **caractérisé en ce que** la sécurité bloquant une rotation en sens inverse se compose d'une lèvre (12a) du palier élastomère (12), qui entoure la tige (17), et se compose, sur la tige (17), de nervures annulaires (19) en saillie vers l'extérieur.

14. Palier servant à supporter un échangeur de chaleur, en particulier un module de refroidissement dans un véhicule automobile, sur un support (3), ledit palier se composant de moyens de fixation placés sur l'échangeur de chaleur et de moyens de retenue placés sur le support (3), où les moyens de fixation sont conçus, sur l'échangeur de chaleur, comme un évidement (11) en forme de pot, ouvert vers le haut, et comme une douille élastomère (12) en forme de godet, douille qui est logée par l'évidement (11), et les moyens de retenue sont conçus, sur le support (3), comme des boulons filetés (8, 9, 13) à limitation de course (16), et en ce que le boulon fileté (8, 9, 13) peut d'une part être vissé dans le support (3) et peut d'autre part être logé pratiquement sans contrainte par la douille (12), où le boulon fileté (13) est doté d'une tête de vis (20), d'un filetage à visser (14), d'une tige (17) et d'une face frontale (18), ainsi que d'un creux (21) servant à l'introduction d'une tête d'outil (22a) qui présente une hauteur de prise h, **caractérisé en ce qu'**un conduit longitudinal (15) de la longueur L1 est disposé dans le boulon fileté (13), ledit conduit longitudinal sortant au niveau de la tête de vis (20) et dans la face frontale (18), et une goupille (16) de la longueur L2 est disposée dans le conduit longitudinal (15), ladite goupille étant mobile dans la direction longitudinale, où la longueur L2 est plus grande que la longueur L1, d'une grandeur ΔL, et ΔL correspond à la hauteur de prise h de la tête d'outil (22a).

15. Palier selon la revendication 14, **caractérisé en ce que** le boulon fileté (13) est logé par la douille (12), de façon imperdable.
